# EUROPEAN PATENT APPLICATION

(11) **EP 4 556 911 A1**
(43) Date of publication of application: **21.05.2025**
(21) Application number: 23839460.5
(22) Date of filing: 28.06.2023
(51) Int. Cl.: G01N 35/00

(54) **AUTOMATIC ANALYSIS DEVICE**

(30) Priority: 12.07.2022 JP 2022111745
(71) Applicant: HITACHI HIGH-TECH CORPORATION, Tokyo 105-6409 (JP)
(72) Inventor: MATSUZAWA Mitsuhiro, Tokyo 100-8280 (JP); SHIMIZU Hayato, Tokyo 100-8280 (JP); KUMAGAI Takahiro, Tokyo 105-6409 (JP); OKUSA Takenori, Tokyo 105-6409 (JP)
(74) Representative: Mewburn Ellis LLP
(86) International application number: PCT/JP2023/023887
(87) International publication number: WO 2024/014286

(57) **Abstract**

An object of the present invention is to provide an automatic analysis device including a cool box that suppresses entry of external heat and moisture through a container access opening without being equipped with a fan that serves as a heat source in a cool chamber. Therefore, the present invention is an automatic analysis device including a cool box configured to keep a liquid cool, the cool box including a cool chamber that holds the liquid, and a cooling device that generates cooling air and supplies the cooling air to the cool chamber, the cool chamber including a disk that supports a container to contain the liquid and is rotatable, a jacket that houses the disk, and a cover that covers a top of the jacket, in which the cover is provided with a container access opening through which the container is taken in and out, and a flow path that generates an air flow crossing below the container access opening.

## Description

### Technical Field

The present invention relates to an automatic analysis device.

### Background Art

An automatic analysis device is generally equipped with a cool box for keeping a reagent container containing a reagent cool, and a cover of the cool box has an opening portion (container access opening) for taking the reagent container in and out. When high-temperature and high-humidity outside air flows into the cool box through the opening portion, condensation may occur in the cool box. Thus, a technique for suppressing the inflow of outside air is considered. For example, PTL 1 describes that "an opening portion for taking a reagent in and out provided in a reagent cover of a reagent cool box is equipped with an air curtain device that generates an air curtain of an air layer capable of blocking outside air from mixing with inside cool air when an opening/closing door is opened" (abstract).

### Citation List

### Patent Literature

PTL 1: JP 2009-139269 A

### Summary of Invention

### Technical Problem

However, in the cool box described in PTL 1, there is a possibility that the air curtain device itself generates heat, and in this case, there is an issue that the temperature in the cool box rises or the temperature distribution in the cool box becomes uneven.

An object of the present invention is to provide an automatic analysis device including a cool box that suppresses entry of external heat and moisture through a container access opening without being equipped with a fan that serves as a heat source in a cool chamber.

### Solution to Problem

A representative means for solving the above problem is an automatic analysis device including a cool box configured to keep a liquid cool, the cool box including a cool chamber that holds the liquid, and a cooling device that generates cooling air and supplies the cooling air to the cool chamber, the cool chamber including a disk that supports a container to contain the liquid and is rotatable, a jacket that houses the disk, and a cover that covers a top of the jacket, in which the cover is provided with a container access opening through which the container is taken in and out, and a flow path that generates an air flow crossing below the container access opening.

Another representative means is an automatic analysis device including a cool box configured to keep a liquid cool, the cool box including a cool chamber that holds the liquid, and a cooling device that generates cooling air and supplies the cooling air to the cool chamber, the cool chamber including a disk that supports a container to contain the liquid and is rotatable, a jacket that houses the disk, and a cover that covers a top of the jacket, in which the cover is provided with a container access opening through which the container is taken in and out, and an upper surface of the cover is equipped with a fan that generates an air flow crossing above the container access opening.

### Advantageous Effects of Invention

According to the present invention, it is possible to provide an automatic analysis device including a cool box that suppresses entry of external heat and moisture through a container access opening without being equipped with a fan that serves as a heat source in a cool chamber. Problems, configurations, and advantageous effects other than those described above will be clarified by the following description of embodiments.

### Brief Description of Drawings

[FIG. 1] FIG. 1 is a view illustrating an overall configuration of a cool box of an automatic analysis device according to Example 1.
[FIG. 2] FIG. 2 is an exploded view of a cool chamber.
[FIG. 3] FIG. 3 is a cross-sectional view taken along a plane including a central axis of the cool chamber and a container access opening.
[FIG. 4] FIG. 4 is a plan view illustrating a positional relationship between an A-A cross section in FIG. 3 and the container access opening.
[FIG. 5] FIG. 5 is a view illustrating air flows in the cool chamber while simplifying a cross section taken along a plane that includes the central axis of the cool chamber and is different from the plane of FIG. 3.
[FIG. 6] FIG. 6 is a view of a B-B cross section in FIG. 3.
[FIG. 7] FIG. 7 is a perspective view of an upper portion of a socket and a cover as viewed obliquely from above.
[FIG. 8] FIG. 8 is a perspective view of what is illustrated in FIG. 7 as viewed from the back side (View A).
[FIG. 9] FIG. 9 is an enlarged view of the vicinity of a flow path of a cover of an automatic analysis device according to Example 2.
[FIG. 10] FIG. 10 is a horizontal cross-sectional view of a cover of an automatic analysis device according to Example 3.
[FIG. 11] FIG. 11 is a cross-sectional view corresponding to FIG. 6 according to Example 4.
[FIG. 12] FIG. 12 is a cross-sectional view corresponding to FIG. 6 according to Example 5.
[FIG. 13] FIG. 13 is a cross-sectional view corresponding to FIG. 6 according to Example 6.
[FIG. 14] FIG. 14 is a cross-sectional view corresponding to FIG. 6 according to Example 7.
[FIG. 15] FIG. 15 is a cross-sectional view corresponding to FIG. 6 according to Example 8.
[FIG. 16] FIG. 16 is a cross-sectional view corresponding to FIG. 6 according to Example 9.
[FIG. 17] FIG. 17 is a cross-sectional view corresponding to FIG. 6 according to Example 10.
[FIG. 18] FIG. 18 is a graph showing a relationship between a flow velocity ratio V2/V1 and the flow rate of air flowing into the cool chamber.

### Description of Embodiments

Hereinafter, an embodiment of the present invention will be described with reference to the drawings. Although the present embodiment includes a plurality of examples, the same reference sign is given to common components, and description thereof will be omitted.

An automatic analysis device includes in addition to a cool box 100, a sample disk, a sample dispensing mechanism, a reagent dispensing mechanism, a constant-temperature bath, a photometer, and the like (not illustrated). The cool box 100 controls the temperature therein to a low level in order to prevent a reagent from being denatured by surrounding environment. The sample disk supports a plurality of sample containers containing a sample on its circumference and is rotatable. When a specific sample container moves to a sample aspiration position by rotation of the sample disk, the sample dispensing mechanism (sample dispensing probe) descends to aspirate the sample from the sample container, then ascends to move horizontally to a predetermined position, and descends again to discharge the aspirated sample into a reaction container.

On the other hand, the cool box 100 has a reagent disk therein, and the reagent disk radially supports a plurality of reagent containers (tubes 27) and can be rotated by a drive unit such as a motor. The reagent dispensing mechanism (reagent dispensing probe) moves horizontally to a reagent aspiration position, then descends to be inserted into a reagent container via an aspiration hole (not illustrated) formed in a cover 11 on a top surface of the cool box 100, and aspirates the reagent. Further, the reagent dispensing mechanism ascends, then moves horizontally to the predetermined position, and descends again to discharge the aspirated reagent into the reaction container. In the reaction container containing the sample and the reagent, a chemical reaction is accelerated in the constant-temperature bath controlled to a constant temperature, and this reaction process is measured by the photometer to analyze the sample.

Here, the cool box 100 includes a cool chamber 10 that holds the reagent containers, and a cooling device 50 that generates cooling air and supplies the cooling air to the cool chamber 10. In addition, a container access opening 16 through which the reagent containers are taken in and out is formed in the cover 11 provided to the cool chamber 10. The cover 11 of the present embodiment has a structure for generating an air curtain in order to suppress inflow of outside air through the container access opening 16. However, the present embodiment employs a structure that generates an air curtain without a fan serving as a heat generation source installed in the cool chamber 10, and thus a temperature rise and temperature unevenness in the cool chamber 10 can be suppressed.

In Examples 1 to 4, the cover 11 of the cool chamber 10 has a structure that generates an air curtain without using a fan, that is, a flow path 23 that generates an air flow crossing below the container access opening 16. Meanwhile, in Examples 5 to 10, the outer side (upper side) of the cover 11 of the cool chamber 10 is equipped with a mechanism that generates an air curtain, that is, an external fan 40 that generates an air flow crossing above the container access opening 16. Hereinafter, each example will be specifically described.

### Example 1

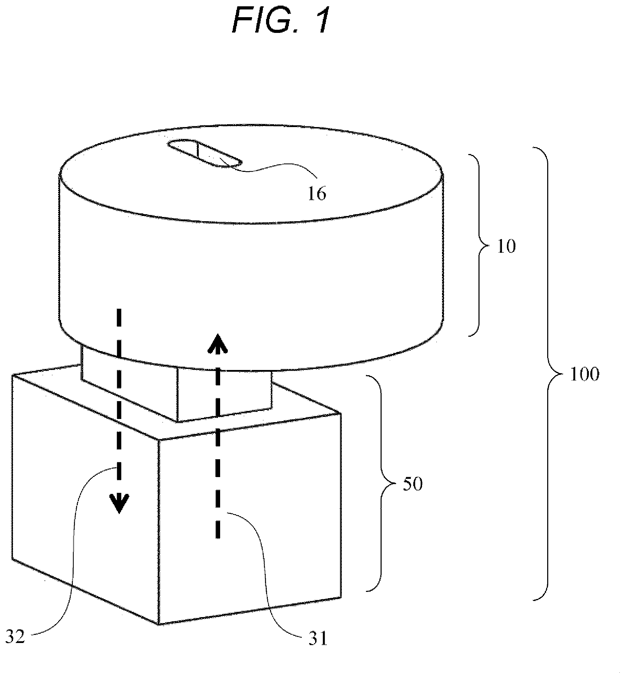

An automatic analysis device according to Example 1 will be described with reference to FIGS. 1 to 8. FIG. 1 is a view illustrating an overall configuration of a cool box of the automatic analysis device according to Example 1. The cool box 100 mainly includes a cool chamber 10 for storing reagents under refrigeration and a cooling device 50 for supplying cooling air to the cool chamber 10. The cooling device 50 is, for example, a device using a refrigeration cycle or a device using a Peltier element.

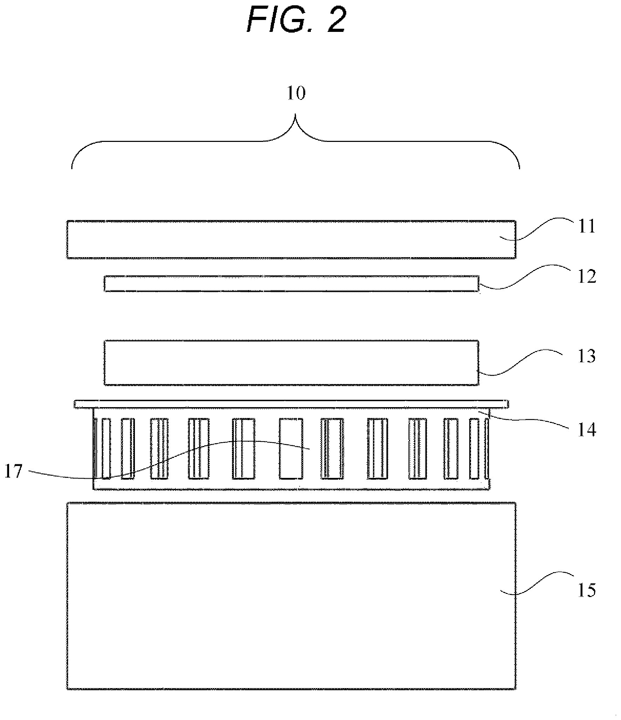

FIG. 2 is an exploded view of the cool chamber. The cool chamber 10 mainly includes a jacket 15, a socket 14, a reagent disk (lower disk 13, upper disk 12), and a cover 11. The jacket 15 houses the reagent disk together with the socket 14.

The socket 14 is disposed in the jacket 15 to rectify air in the jacket 15, and an air inlet 17 is formed in an outer peripheral surface thereof. Power of a drive unit is transmitted to the lower disk 13 via a rotation shaft 19 so that the lower disk 13 can rotate together with the upper disk 12. Note that the reagent disk of the present embodiment is configured by combining the upper disk 12 and the lower disk 13, but may be configured integrally. The cover 11 covers the top of the jacket 15, and is provided with a container access opening for taking tubes 27 in and out between the inside and the outside of the cool chamber 10. The jacket 15 and the cover 11 are desirably made of heat insulating material with low thermal conductivity. On the other hand, the upper disk 12, the lower disk 13, and the socket 14 are made of, for example, resin such as polypropylene, polystyrene, polyphenylene sulfide, and polyester.

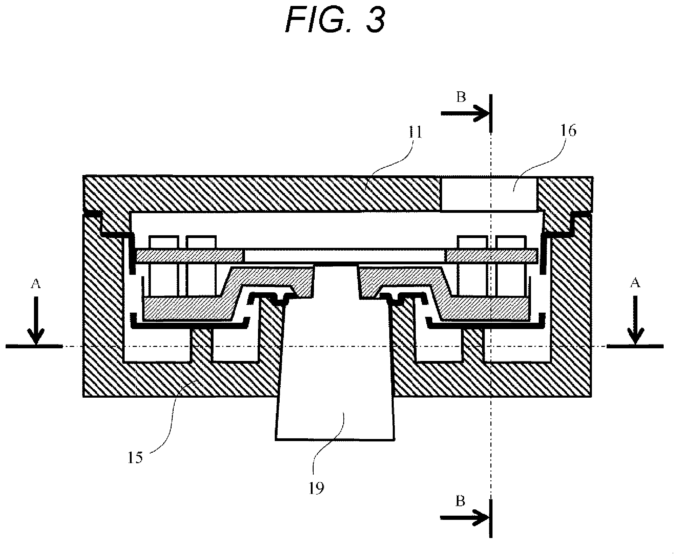

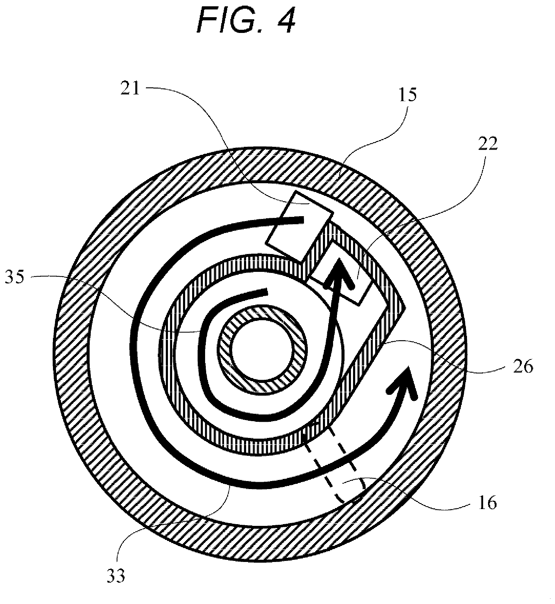

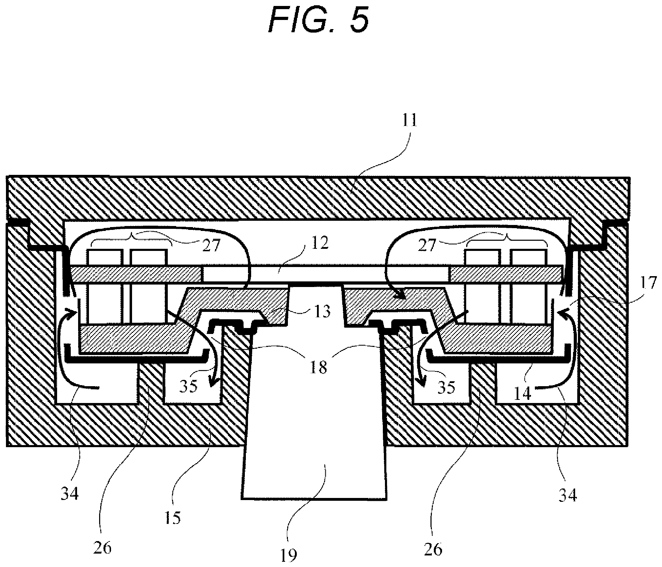

Next, air flows will be described with reference to FIGS. 1 to 6. FIG. 3 is a cross-sectional view taken along a plane including a central axis of the cool chamber and the container access opening, FIG. 4 is a plan view illustrating a positional relationship between an A-A cross section in FIG. 3 and the container access opening, and FIG. 5 is a view illustrating air flows in the cool chamber while simplifying a cross section taken along a plane that includes the central axis of the cool chamber and is different from the plane of FIG. 3.

The air cooled by the cooling device 50 flows by a fan (not illustrated) constituting a part of the cooling device 50, and flows into the cool chamber 10 as indicated by arrow 31 in FIG. 1. At this time, as illustrated in FIG. 4, the air supplied from the cooling device 50 is taken into the cool chamber 10 via a cool chamber inlet 21 formed in a lower portion of the jacket 15. Note that, in addition to the cool chamber inlet 21, a cool chamber outlet 22 is also formed in the lower portion of the jacket 15 for retrieving the air having circulated in the cool chamber 10 and contributed to cooling the reagent to the cooling device 50.

The air flowing into the cool chamber 10 flows counterclockwise along the outer diameter side of a partition 26 as indicated by arrow 33 in FIG. 4. Here, the partition 26 is formed so as to protrude upward from a bottom surface of the jacket 15, and defines a space on the outer diameter side having the cool chamber inlet 21 and a space on the inner diameter side having the cool chamber outlet 22. While flowing in the circumferential direction, the air flows into a space inside the socket 14, that is, a space where the reagent disk and the tubes 27 are present, via the air inlet 17 formed in the outer peripheral surface of the socket 14, as indicated by arrow 34 in FIG. 5. The air that has cooled the tubes 27 is sent out to a space outside (below) the socket 14 and on the inner diameter side of the partition 26 via an air outlet 18 formed in an inner peripheral surface of the socket 14 as indicated by arrow 35 in FIG. 5. Thereafter, the air flows counterclockwise, flows out of the cool chamber 10 through the cool chamber outlet 22 as indicated by arrow 35 in FIG. 4, and is retrieved to the cooling device 50 as indicated by arrow 32 in FIG. 1.

The air flows in the cool chamber 10 are not limited to those described above. For example, when the cool chamber inlet 21 is provided in the space on the inner diameter side and the cool chamber outlet 22 is provided in the space on the outer diameter side, the air flows in the cool chamber 10 are clockwise. In this case, the air inlet 17 is formed in the inner peripheral surface of the socket 14, and the air outlet 18 is formed in the outer peripheral surface of the socket 14.

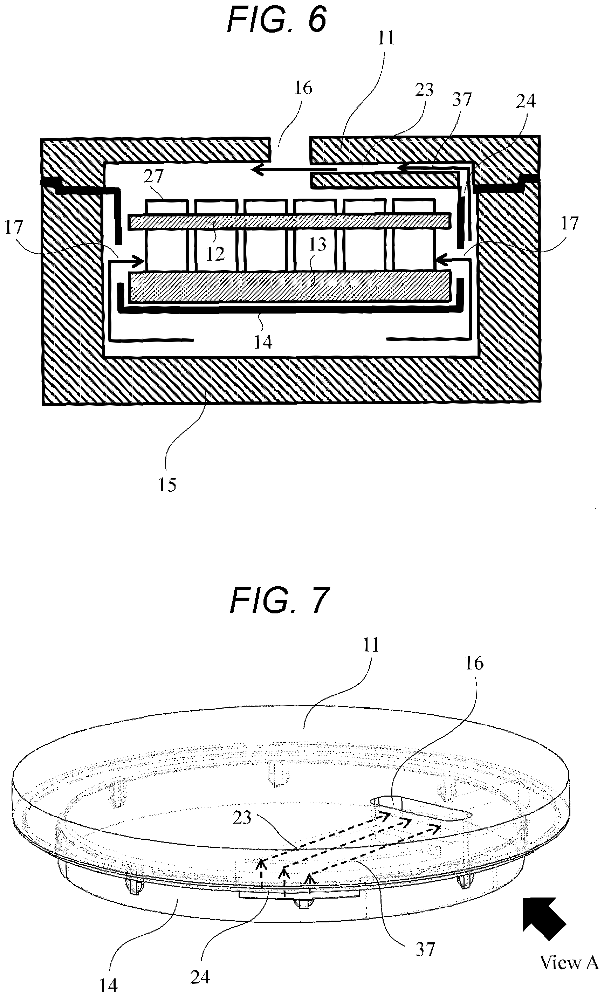

While the air flows in the cool chamber 10 described above constitute a main flow that is generated by the fan in the cooling device 50, in this example, a part of the main flow is diverted by a flow path 23 of the cool chamber 10 to form an air curtain. That is, as illustrated in FIG. 6, the flow path 23 of this example takes in a part of the air in the cool chamber 10 and blows out the part of the air in the horizontal direction toward the lower side of the container access opening 16. FIG. 6 is a view of a B-B cross section in FIG. 3.

An inlet 24 of the flow path 23 is formed at a portion on the outer diameter side of the container access opening 16, where the cover 11 faces the socket 14. Specifically, connecting a through hole formed in an upper portion of the socket 14 and an opening formed in a lower surface of the cover 11 allows the air to be taken into the flow path 23. That is, the inlet 24 is formed on the outer diameter side of the cover 11, so that a particularly strong air flow (with high flow velocity) can be taken into the flow path 23 from the main flow in the cool chamber 10.

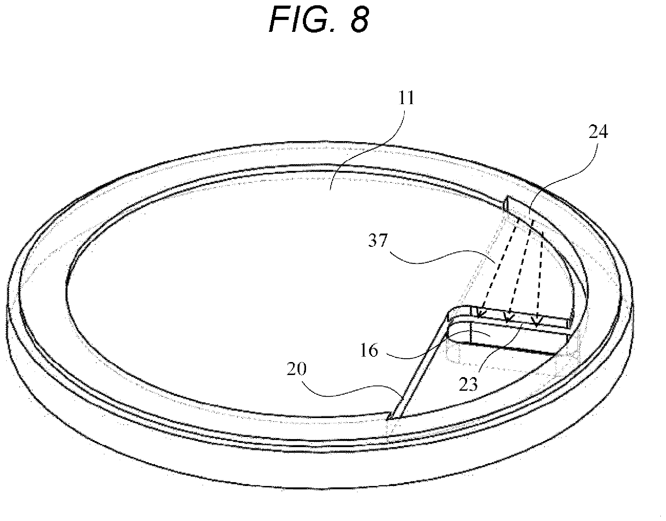

Next, the configuration of the cover will be described in detail with reference to FIGS. 7 and 8. FIG. 7 is a perspective view of the upper portion of the socket and the cover as viewed obliquely from above, and FIG. 8 is a perspective view of what is illustrated in FIG. 7 as viewed from the back side (View A). Arrow 37 in each figure, arrow 37 in the drawings, indicates how the air flows from the inlet 24 toward the container access opening 16 through the flow path 23.

In a case where the main flow of the air in the cool chamber 10 is counterclockwise as described above, it is considered that a strong air curtain can be generated when the flow path 23 into which the main flow branches off and flows is close to the direction of the main flow. Therefore, the inlet 24 of the flow path 23 is desirably located closer to the upstream side of the main flow than the container access opening 16.

The container access opening 16 has a shape of a long hole extending from the inner diameter side to the outer diameter side. The flow path 23 is formed so as to be perpendicular to the longitudinal direction of the long hole of the container access opening 16. This causes the flow of the air blown out from the flow path 23 to be also perpendicular to the longitudinal direction of the container access opening 16. Because the distance to cross the container access opening 16 is shorted as compared with the case of diagonally crossing it, outside air hardly enters from the upper side of the container access opening 16.

However, the flow of the air taken into the flow path 23 through the inlet 24 tends to be directed toward the inner diameter side. In view of this, in order to maintain the flow of the air blown out from the flow path 23 perpendicular to the longitudinal direction of the container access opening 16, it is desirable to provide a guide portion that intentionally guides the air to the outer diameter side. Therefore, in this example, as illustrated in FIG. 8, a step 20 extending in a direction perpendicular to the longitudinal direction of the container access opening 16 is formed as the guide portion on the opposite side of the container access opening 16 from the flow path 23 in the lower surface of the cover 11.

According to this example, since an air curtain is formed by air flowing so as to close the lower side of the container access opening 16, entry of heat and moisture from the outside via the container access opening 16 is suppressed.

Furthermore, since it is not necessary to install a heat source such as a fan for generating an air curtain in the cool chamber 10, a temperature rise in the cool chamber 10 can be prevented. As a result, it is possible to suppress not only condensation in the cool chamber 10 but also a temperature rise and temperature unevenness.

### Example 2

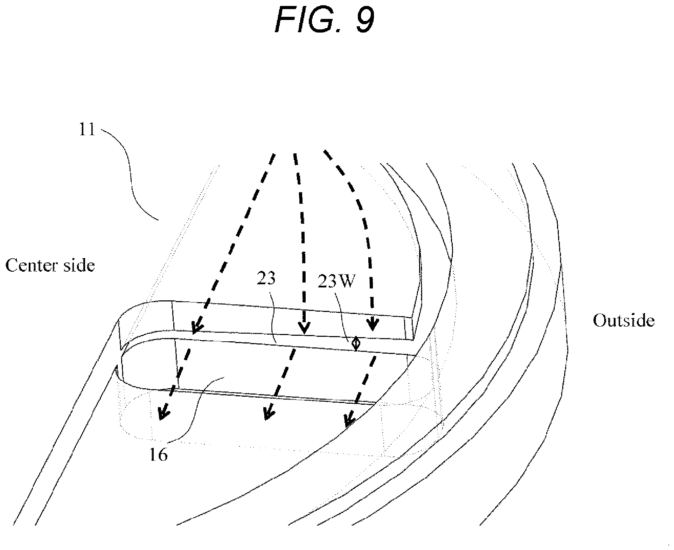

An automatic analysis device according to Example 2 will be described with reference to FIG. 9. FIG. 9 is an enlarged view of the vicinity of the flow path of the cover of the automatic analysis device according to Example 2. This example employs, as a guide portion that intentionally guides the air to the outer diameter side, such a shape that the height dimension 23W of the flow path 23 is larger on the outer diameter side than on the inner diameter side. This results in rectification of the air flow that tends to be directed toward the inner diameter side, and thus the flow velocity of the air crossing the container access opening 16 is uniform in the radial direction. That is, there is no pressure difference in the longitudinal direction of the container access opening 16, and the advantageous effect of preventing air from entering from the outside of the cool chamber 10 is enhanced.

### Example 3

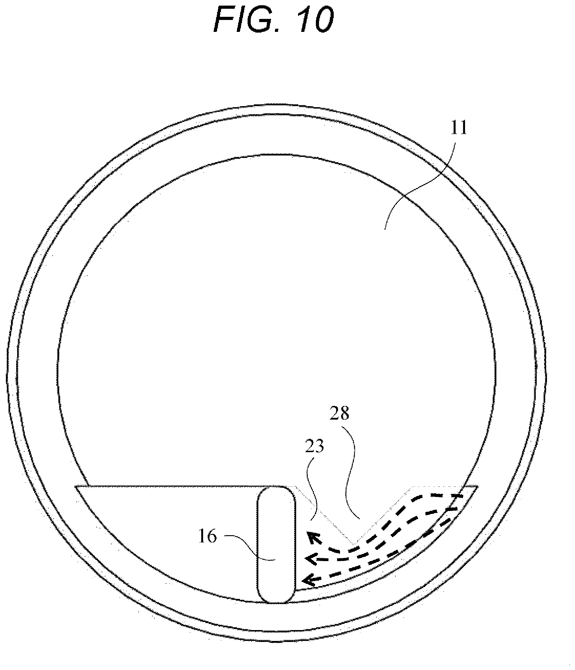

An automatic analysis device according to Example 3 will be described with reference to FIG. 10. FIG. 10 is a horizontal cross-sectional view of the cover of the automatic analysis device according to Example 3. In this example, as a guide portion that intentionally guides the air to the outer diameter side, a baffle plate 28 that obstructs the flow on the inner diameter side is formed in the middle of the flow path 23. This results in rectification of the air flow that tends to be directed toward the inner diameter side, and thus the flow velocity of the air crossing the container access opening 16 is uniform in the radial direction. That is, there is no pressure difference in the longitudinal direction of the container access opening 16, and the advantageous effect of preventing air from entering from the outside of the cool chamber 10 is enhanced.

### Example 4

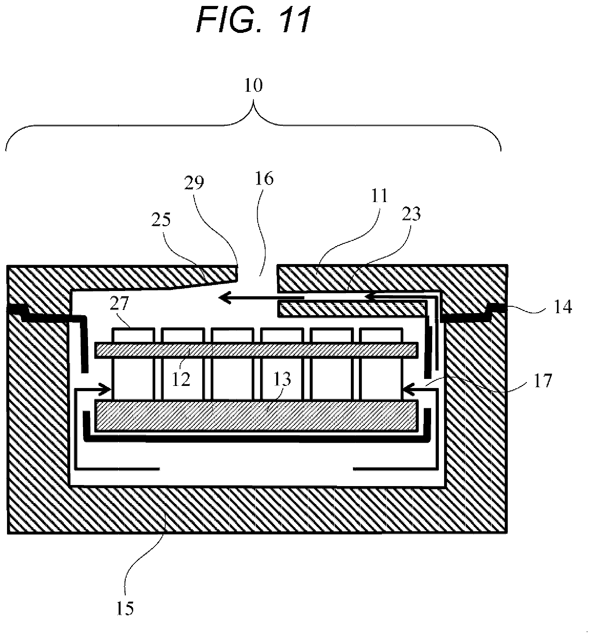

An automatic analysis device according to Example 4 will be described with reference to FIG. 11. FIG. 11 is a cross-sectional view corresponding to FIG. 6 according to Example 4. In this example, an inclination 25 is formed in the lower surface of the cover 11 at a portion across the container access opening 16 from the flow path 23, and the cover 11 becomes thinner toward the container access opening 16.

According to this example, the air blown out from the flow path 23 hardly hits a downstream side wall 29 of the container access opening 16, and thus the air is prevented from flowing out of the cool chamber 10 and is easily guided into the cool chamber 10. That is, the advantageous effect of preventing air from entering from the outside of the cool chamber 10 is enhanced.

### Example 5

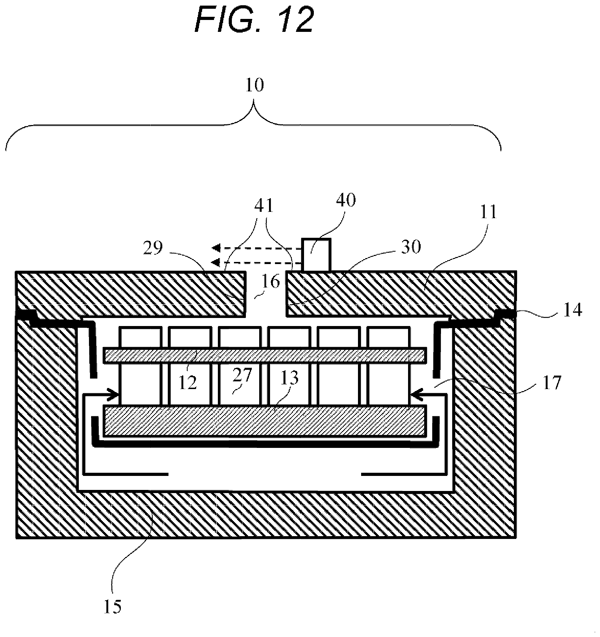

An automatic analysis device according to Example 5 will be described with reference to FIG. 12. FIG. 12 is a cross-sectional view corresponding to FIG. 6 according to Example 5. In this example, unlike above-described Examples 1 to 4, an external fan 40 that generates an air flow crossing above the container access opening 16 is provided on an upper surface of the cover 11 of the cool chamber 10. The external fan 40 includes, for example, an axial fan, a cross-flow fan, a centrifugal fan, or the like.

According to this example, since an air curtain is formed by air flowing so as to close the upper side of the container access opening 16, entry of heat and moisture from the outside via the container access opening 16 is suppressed.

In addition, since the external fan 40 of this example is installed outside the cool chamber 10, a temperature rise in the cool chamber 10 due to the heat generated by the external fan 40 itself can be prevented. As a result, it is possible to suppress not only condensation in the cool chamber 10 but also a temperature rise and temperature unevenness. Moreover, in this example, unlike Examples 1 to 4, it is not necessary to form the flow path 23 in the cover 11, resulting in a simplified structure of the cover 11 and the socket 14.

Furthermore, in this example, the flow velocity in the vicinity of a cover upper surface 41 is increased by the external fan 40, resulting in an increase in the heat transfer coefficient between the cover upper surface 41 and the outside air and an increase in the temperature of a side wall (the downstream side wall 29 and an upstream side wall 30) surrounding the container access opening 16. This action causes the temperature of the side wall surrounding the container access opening 16 to be higher than the air temperature in the vicinity of the container access opening 16, thereby the occurrence of condensation on the side wall surrounding the container access opening 16 can be further suppressed.

### Example 6

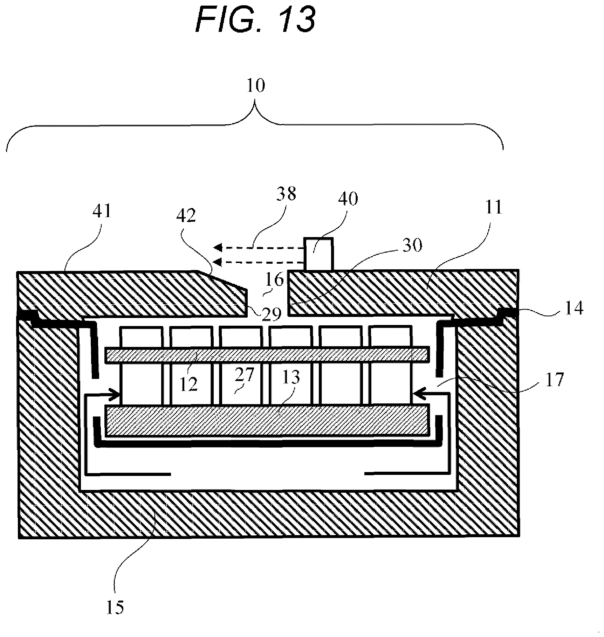

An automatic analysis device according to Example 6 will be described with reference to FIG. 13. FIG. 13 is a cross-sectional view corresponding to FIG. 6 according to Example 6. In this example, unlike Example 5, an inclination 42 is formed in the upper surface of the cover 11 on the downstream side of the air with respect to the container access opening 16, and the cover 11 becomes thinner toward the container access opening 16.

According to this example, the air blown out from the external fan 40 hardly hits the downstream side wall 29 of the container access opening 16, and thus the air is prevented from flowing into the cool chamber 10 and is easily guided to the outside of the cool chamber 10. That is, the advantageous effect of preventing air from entering from the outside of the cool chamber 10 is enhanced.

### Example 7

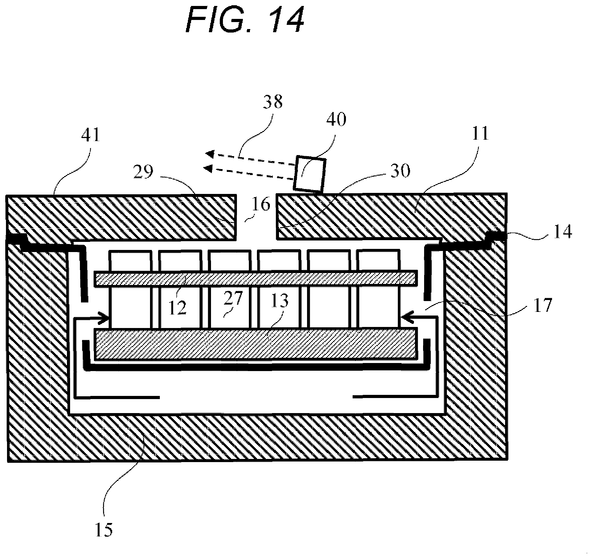

An automatic analysis device according to Example 7 will be described with reference to FIG. 14. FIG. 14 is a cross-sectional view corresponding to FIG. 6 according to Example 7. Unlike the external fan 40 of Example 5, the external fan 40 of this example blows out air in a direction inclined upward with respect to the horizontal direction.

Also according to this example, the air blown out from the external fan 40 hardly hits the downstream side wall 29 of the container access opening 16, and thus the air is prevented from flowing into the cool chamber 10 and is easily guided to the outside of the cool chamber 10. That is, the advantageous effect of preventing air from entering from the outside of the cool chamber 10 is enhanced.

### Example 8

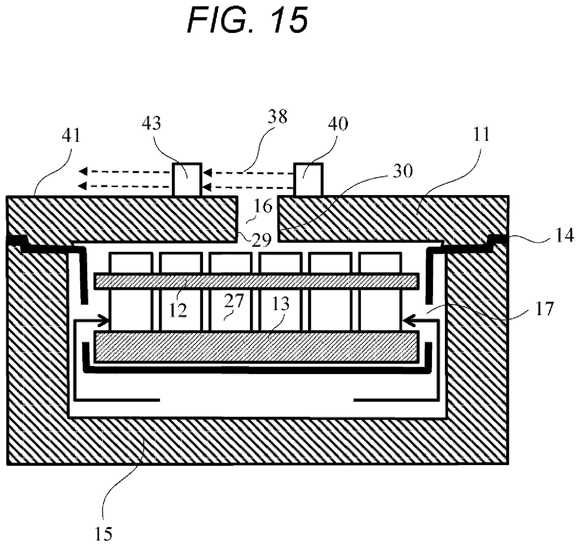

An automatic analysis device according to Example 8 will be described with reference to FIG. 15. FIG. 15 is a cross-sectional view corresponding to FIG. 6 according to Example 8. In this example, unlike Example 5, a second external fan 43 is provided on the upper surface of the cover 11 on the opposite side of the container access opening 16 from the external fan 40. It is desirable that the flow rates of the external fan 40 and the second external fan 43 are equal.

According to this example, the air 38 blown out from the external fan 40 flows into the second external fan 43 while flow spreading is suppressed. As a result, the air blown out from the external fan 40 hardly hits the downstream side wall 29 of the container access opening 16, and thus the air is prevented from flowing into the cool chamber 10 and is easily guided to the outside of the cool chamber 10. That is, the advantageous effect of preventing air from entering from the outside of the cool chamber 10 is enhanced.

### Example 9

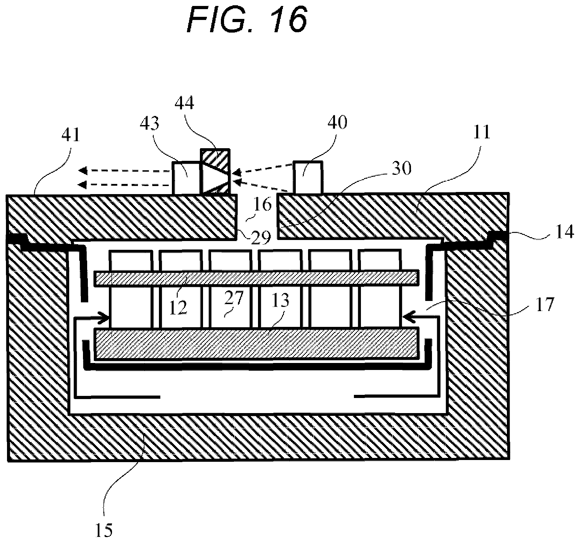

An automatic analysis device according to Example 9 will be described with reference to FIG. 16. FIG. 16 is a cross-sectional view corresponding to FIG. 6 according to Example 9. In this example, unlike Example 8, a jig 44 is provided on the upstream side of the second external fan 43. The jig 44 is configured such that a flow path cross-sectional area decreases from the downstream side to the upstream side.

According to this example, the air blown out from the external fan 40 flows into the jig 44 while the flow is constricted, which suppresses flow spreading. As a result, the air blown out from the external fan 40 hardly hits the downstream side wall 29 of the container access opening 16, and thus the air is prevented from flowing into the cool chamber 10 and is easily guided to the outside of the cool chamber 10. That is, the advantageous effect of preventing air from entering from the outside of the cool chamber 10 is enhanced.

### Example 10

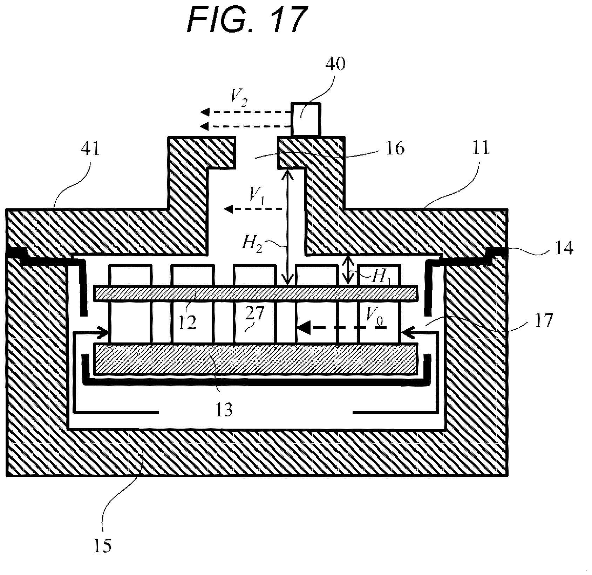

An automatic analysis device according to Example 10 will be described with reference to FIG. 17. FIG. 17 is a cross-sectional view corresponding to FIG. 6 according to Example 10. In this example, unlike Example 5, the distance between a lower surface of the container access opening 16 and the reagent disk (upper disk 12) is made longer than the distance between a bottom surface of the cover 11 and the reagent disk (upper disk 12), so that a space below the container access opening 16 is enlarged. That is, in this example, when the distance between the bottom surface of the cover 11 and an upper surface of the upper disk 12 is H1 and the distance between the lower surface of the container access opening 16 and the upper surface of the upper disk 12 is H2, H2 > H1 is satisfied.

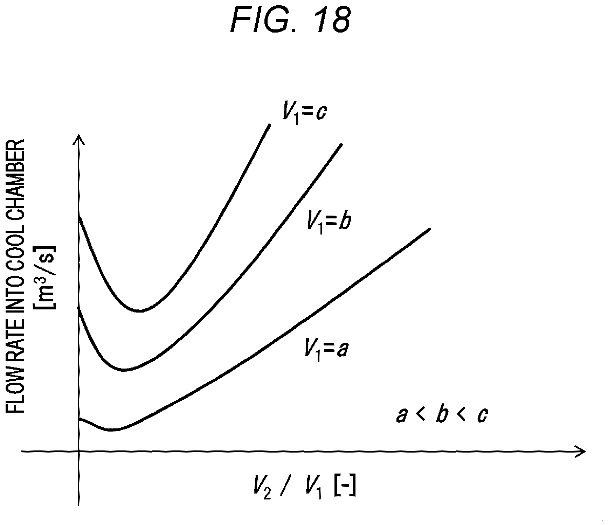

In the case of the cover 11 of this example, the flow rate of air passing through the container access opening 16 from the outside of the cool chamber 10 and flowing into the cool chamber 10 exhibits the relationship of FIG. 18. Here, V2 is the flow velocity of air on the downstream side of the external fan 40, V1 is the flow velocity of air on the lower side (on the cool chamber 10 side) of the container access opening 16, and V0 is the flow velocity of air flowing in the vicinity of the tubes 27 supported by the reagent disk. As illustrated in FIG. 18, when V2/V1 is a predetermined value, the smaller the V1, the smaller the inflow rate. Meanwhile, V0 is preferably large because small V0 reduces capacity to cool the entire cool box and also increases variation in the temperature in the cool chamber 10. Therefore, it is preferable to reduce V1 while increasing V0.

According to this example, since only the space below the container access opening 16 is enlarged, it is possible to reduce V1 while keeping V0 large, and reduce the flow rate of the air passing through the container access opening 16 and flowing into the cool chamber 10. In addition, since the distance between the container access opening 16 and the upper disk 12 is made longer, condensation occurring on the upper disk 12, the lower disk 13, the tubes 27, and the like is further suppressed.

The above-described examples have been described in detail to clearly explain the present invention, and all the described configurations are not necessarily included. In addition, a part of the configuration of a certain example can be replaced with or added to the configuration of another example.

Moreover, the present invention is not limited to the above-described examples, and various modifications are possible. For example, since an aspiration hole, which is smaller than the container access opening 16, is also formed in the cover 11, there may be provided a flow path for generating an air flow crossing below the aspiration hole or a fan for generating an air flow crossing above the aspiration hole. Moreover, in above-described Examples 5 to 10, although the external fan 40 is installed on the upstream side of the container access opening 16 with respect to the air flow in the cool chamber 10 (see arrow 33 in FIG. 4), the external fan 40 may be installed on the downstream side of the container access opening 16.

Furthermore, in the above-described examples, although the description has been given with reference to the figures in which the container access opening 16 has no lid, a lid may be installed on the container access opening 16. In particular, in a case where a lid is installed on the container access opening 16 in Examples 5 to 10, control may be performed such that opening the lid starts the external fan 40 and the like and closing the lid stops the external fan 40 and the like. Moreover, in the above-described examples, although the storage box for keeping reagents cool has been described as an example, but the cool box may keep a liquid other than reagents (for example, a sample) cool.

### Reference Signs List

- 10: cool chamber
- 11: cover
- 12: upper disk
- 13: lower disk
- 14: socket
- 15: jacket
- 16: container access opening
- 17: air inlet
- 18: air outlet
- 19: rotation shaft
- 20: step
- 21: cool chamber inlet
- 22: cool chamber outlet
- 23: flow path
- 24: inlet
- 25: inclination
- 26: partition
- 27: tube
- 28: baffle plate
- 29: downstream side wall of container access opening
- 30: upstream side wall of container access opening
- 40: external fan
- 41: cover upper surface
- 42: inclination
- 43: second external fan
- 44: jig
- 50: cooling device
- 100: cool box

## Claims

1. An automatic analysis device comprising a cool box configured to keep a liquid cool,
the cool box including a cool chamber that holds the liquid, and a cooling device that generates cooling air and supplies the cooling air to the cool chamber,
the cool chamber including a disk that supports a container to contain the liquid and is rotatable, a jacket that houses the disk, and a cover that covers a top of the jacket,
wherein the cover is provided with a container access opening through which the container is taken in and out, and a flow path that generates an air flow crossing below the container access opening.

2. The automatic analysis device according to claim 1, wherein the flow path takes in a part of air in the cool chamber and blows out the part of air in a horizontal direction toward a lower side of the container access opening.

3. The automatic analysis device according to claim 2, wherein the cover includes a guide portion that guides air to an outer diameter side.

4. The automatic analysis device according to claim 3, wherein the guide portion has such a shape that a height dimension of the flow path is larger on the outer diameter side than on an inner diameter side.

5. The automatic analysis device according to claim 3, wherein the guide portion is a baffle plate that is formed in a middle of the flow path and obstructs a flow on an inner diameter side.

6. The automatic analysis device according to claim 2,
wherein the container access opening has a shape of a long hole extending from an inner diameter side to an outer diameter side, and
air guided into the flow path is blown out perpendicularly to a longitudinal direction of the long hole.

7. The automatic analysis device according to claim 2, wherein a lower surface of the cover is provided with an inclination at a portion across the container access opening from the flow path, and the cover becomes thinner toward the container access opening.

8. The automatic analysis device according to claim 2,
wherein the cool chamber further includes a socket that is disposed in the jacket and rectifies air in the jacket, and
an inlet of the flow path is formed at a portion facing the socket on an outer diameter side of the container access opening.

9. The automatic analysis device according to claim 8,
wherein the jacket is provided with an inlet through which cooling air supplied from the cooling device is taken in, and an outlet through which air having circulated in the cool chamber to cool the container is retrieved to the cooling device, and
the socket is provided with an air inlet through which the cooling air taken into the jacket through the inlet flows in, and an air outlet through which the air flows out to a space having the outlet,
wherein a main flow of the cooling air taken in through the air inlet cools the container and reaches the air outlet, and
air diverted from the main flow of the cooling air is taken into the flow path.

10. An automatic analysis device comprising a cool box configured to keep a liquid cool,
the cool box including a cool chamber that holds the liquid, and a cooling device that generates cooling air and supplies the cooling air to the cool chamber,
the cool chamber including a disk that supports a container to contain the liquid and is rotatable, a jacket that houses the disk, and a cover that covers a top of the jacket,
wherein the cover is provided with a container access opening through which the container is taken in and out, and
an upper surface of the cover is equipped with a fan that generates an air flow crossing above the container access opening.

11. The automatic analysis device according to claim 10, wherein the upper surface of the cover is provided with an inclination on a downstream side of air with respect to the container access opening, and the cover becomes thinner toward the container access opening.

12. The automatic analysis device according to claim 10, wherein the fan blows out air in a direction inclined upward with respect to a horizontal direction.

13. The automatic analysis device according to claim 10, wherein the upper surface of the cover is equipped with a second fan separate from the fan on an opposite side of the container access opening from the fan.

14. The automatic analysis device according to claim 10, wherein a distance between a lower surface of the container access opening and the disk is larger than a distance between a bottom surface of the cover and the disk.
